# EUROPÄISCHE PATENTSCHRIFT

(11) **EP 0 463 366 B1**
(45) Veröffentlichungstag und Bekanntmachung des Hinweises auf die Patenterteilung: **13.04.1994**
(21) Anmeldenummer: 91108410.1
(22) Anmeldetag: 24.05.1991
(51) Int. Cl.: F16C 13/00, D21G 1/02

(54) **Durchbiegungseinstellwalze**
Press-roll with adjustable deflection
Cylindre presseur à réglage de flexion

(30) Priorität: 25.06.1990 CH 2113/90
(43) Veröffentlichungstag der Anmeldung: 02.01.1992
(73) Patentinhaber: Sulzer - Escher Wyss AG, CH-8023 Zürich (CH)
(72) Erfinder: Schnyder, Eugen, CH-5622 Waltenschwil (CH); Lehmann, Rolf, CH-8964 Rudolfstetten (CH)
(74) Vertreter: Finsterwald, Manfred, Dipl.-Ing., Dipl.-Wirtsch.-Ing.

(56) Entgegenhaltungen:
- WO-A-89/01542
- DE-A- 3 612 207
- FR-A- 1 598 986
- FR-A- 2 297 351
- GB-A- 667 782
- GB-A- 2 081 420
- GB-A- 2 105 497
- GB-A- 2 126 689
- US-A- 2 203 862

## Beschreibung

Die Erfindung betrifft eine Durchbiegungseinstellwalze mit einem um einen drehfesten Träger rotierbaren, gegenüber dem Träger mit wenigstens einem in seiner Stützrichtung eine Presskraft ausübenden Stützelement abgestützten Walzenmantel, wobei der Walzenmantel aus einem inneren und einem äusseren Teil besteht.

Durchbiegungseinstellwalzen werden zur Druck- oder Pressbehandlung einer durch eine Druck- oder Walzvorrichtung hindurchlaufenden Bahn verwendet und sind beispielsweise aus der US-A-3 802 044 oder US-A-3 885 283 bekannt.

Die Stützelemente können dabei, wie in der genannten Publikation beschrieben, als hydrostatische Stützelemente ausgeführt sein oder in anderer bekannter Art, zum Beispiel als hydrodynamische, pneumatische, magnetische oder mechanische, z.B. mit Federkraft angepresste Stützelemente, oder als Druckkissen oder abgedichtete Druckräume.

Gelegentlich werden solche Walzen mit einem sogenannten Kantilever bestückt. Diese Vorrichtung erlaubt es, bei einer Walze der eingangs angeführten Art den Walzenmantel auszuwechseln, ohne dass die Walze aus der Maschine ausgebaut wird. Auch ausserhalb der Maschine ist es in vielen Fällen erforderlich, den Walzenmantel relativ schnell auswechseln zu können, insbesondere um die Anzahl von Reservewalzen bei einer gegebenen Walzvorrichtung in Grenzen zu halten.

Bei vorbekannten Walzen müssen zum Austausch des Walzenmantels die Innenteile, insbesondere die Stützelemente freigelegt werden. Dabei bildet das in der Walze vorhandene Drucköl, welches beim Mantelwechsel freigesetzt wird, einen störenden Faktor. Ausserdem erfordert das Aufziehen eines neuen Mantels auf die Stützelemente einen unerwünschten Aufwand, insbesondere um die im Walzeninneren vorgesehenen Dichtungen und Stützelemente nicht zu beschädigen und an den neuen Walzenmantel anzupassen.

Bei der in DE-A-3 612 207 (Basis für die Oberbegriffe der Ansprüche 1 und 5) beschriebenen Walze besteht der Mantel aus zwei Teilen, die mittels in Zwischenrillen gepressten Drucköles voneinander gelöst werden können. Beim Mantelwechsel wird dieses Drucköl zwangsläufig nach aussen freigesetzt und verschmutzt ebenfalls die Umgebung.

Die Erfindung setzt sich die Aufgabe, die vorstehend angeführten Nachteile des Standes der Technik zu beseitigen und einen schnellen Austausch des Walzenmantels einer Durchbiegungseinstellwalze zu erreichen, insbesondere ohne dass die Walze aus der Maschine ausgebaut werden muss, jedoch auch ausserhalb der Maschine, wobei das Druckmittel in der Walze verbleibt, wobei die Wirkung von Dichtungen und Lagerungen durch den Mantelwechsel nicht beeinträchtigt wird, und wobei der zeitliche, personelle und gerätetechnische Aufwand vermindert ist.

Erfindungsgemäss wird diese Aufgabe durch die kennzeichnenden Merkmale der Patentansprüche gelöst. Dadurch bilden der äussere und der innere Teil des Walzenmantels im Betriebszustand einen Presssitz miteinander, während zum Auswechseln des äusseren Teiles ein für eine axiale Bewegung des äusseren Teiles gegenüber dem inneren Teil ausreichendes Spiel zwischen beiden Teilen erzeugbar ist, welches ein Abziehen des äusseren Teiles und das Aufziehen eines neuen äusseren Teiles des Walzenmantels gestattet.

Der für einen hinreichend festen Zusammenschluss des inneren und äusseren Mantelteiles erforderliche Presssitz kann bei einer ersten Ausführung durch Ausübung einer Presskraft auf den Innenteil von innen her erfolgen, etwa durch Ausübung einer hydraulischen Kraft, mit einem Hydraulikmittel unter Ueberdruck, auf pneumatische, elektro-magnetische oder mechanische Weise, oder aber durch die Eigenelastizität des inneren oder äusseren Walzenmantelteiles. Der Ausbau des äusseren Teiles erfolgt dagegen in drucklosem Zustand, d.h. ohne wesentlichen Druckölverlust.

Bei einer vorteilhaften Ausbildung der Erfindung kann beispielsweise mittels des für die Stützelemente ohnehin erforderlichen Druckmittels ein hydraulischer Druck aufgebaut werden, welcher den inneren Teil an den äusseren Teil des Walzenmantels andrückt. Um hierbei den nötigen Ueberdruck zu erreichen, kann der Abfluss des aus den Stützelementen austretenden Druckmittels in geeigneter Weise gedrosselt werden. Zum Auswechseln des äusseren Walzenmantelteiles wird die Drosselung des Druckmittelablaufs aufgehoben, so dass sich ein genügendes Spiel zwischen den beiden Walzenmantelteilen bildet, das ein Abziehen des äusseren Teiles erlaubt.

Zur Erzeugung oder Vergrösserung des für ein Abziehen des äusseren Walzenmantelteiles erforderlichen Spieles kann bei einer zweiten Ausführung das Innere der Walze auch unter Unterdruck gesetzt werden, so dass sich der äussere Teil leichter abziehen lässt.

In den genannten Fällen wird lediglich der äussere Walzenmantelteil, der einem Verschleiss unterworfen ist, ausgetauscht, während der innere Teil auf dem Träger verbleibt. Die Dichtungen und Lagerungen werden daher beim Aufziehen eines neuen äusseren Walzenmantelteiles nicht beeinflusst und deren Wirkung bleibt voll erhalten, d.h. es ist keine neue Anpassung erforderlich.

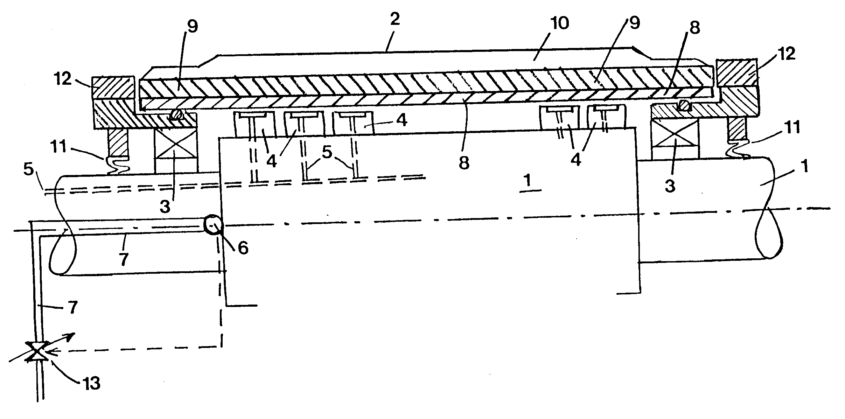

Die Erfindung wird anhand der beiliegenden Figur näher erläutert. Diese zeigt einen Längsschnitt durch eine Walze mit hydraulisch angepresstem Innenteil.

Bei der in der Figur dargestellten Durchbiegungseinstellwalze ist ein drehfester Träger 1 vorgesehen, um welchen ein Walzenmantel 2 rotierbar gelagert ist. Bei dieser Lagerung 3 kann es sich um eine radial feste Lagerung handeln, wie beispielsweise in US 3 802 044 offenbart, oder um eine wenigstens in der vorgesehenen Stützrichtung radial bewegliche Lagerung, beispielsweise gemäss US 3 885 283, oder unter Verwendung einer anderen bekannten Radialführung. Der Walzenmantel 2 ist gegenüber dem Träger in der vorgesehenen Stützrichtung durch Stützelemente 4 abgestützt, welche als hydrostatische Stützelemente gemäss US 3 802 044 oder in anderer bekannter Art ausgebildet sein können. Dabei kann es sich um ein einziges durchgehendes Stützelement handeln oder um eine Reihe in Achsenrichtung benachbarter Stützelemente. Die hydrostatischen Stützelemente 4 werden in bekannter Weise über Bohrungen 5 im Träger mit einem geeigneten hydraulischen Druckmittel, beispielsweise Wasser oder Drucköl, versorgt und an die Innenseite des Walzenmantels 2 angepresst. Das aus den Lagertaschen der hydrostatischen Stützelemente 4 in den Innenraum der Walze ausfliessende Druckmittel wird von mindestens einer Bohrung 6 im Träger gesammelt und über eine Abflussleitung 7 nach aussen abgeführt.

Die Stützelemente können zu einer oder mehreren Stützzonen zusammengefasst sein. Ebenso ist die Verwendung einer Steuerung der Stützelemente zur Veränderung der Arbeitsbreite und der Einsatz von in Gegenrichtung wirkenden Rückzugselementen möglich.

Im dargestellten Beispiel besteht der Walzenmantel 2 aus wenigstens zwei Teilen, nämlich einem Innenteil 8 und einem Aussenteil 9. Der Aussenmantel 9 kann je nach Verwendung wiederum einen Ueberzug 10, beispielsweise aus elastischem Material oder Gummi aufweisen. Der Aussenteil des Mantels kann hochflexibler Art sein, oder aber es kann sich um einen Stahlmantel bzw. einen Mantel anderer bekannter Bauart handeln. Zweckmässig ist es, wenn dieser Aussenmantel in radialer Richtung eine gewisse Steifigkeit aufweist. Der Innenmantel ist aus einem Material hergestellt, welches sich in gewissen Grenzen aufweiten lässt. Er sollte eine gewisse Flexibilität aufweisen, andererseits jedoch eine gewisse Radialsteifigkeit, so dass der Innenteil bei einer Ausweitung eine Gegenhaltung erfährt. Diese Eigenschaft ist beispielsweise mit einem gezielt aufgebauten Kunststoffrohr erreichbar, wobei eine elastische Dehnung im Bereich von 1% problemlos erreichbar ist.

Der Aussendurchmesser des Innenteiles 8 und der Innendurchmesser des Aussenteiles 9 des Walzenmantels 2 sind nun so gewählt, dass ohne Einwirkung von Kräften ein Spiel im Bereich von Zehntelmillimetern existiert. Mit einem solchen Spiel lässt sich der Aussenteil bequem in Axialrichtung bewegen, d.h. vom Rest der Walze abziehen bzw. auf die Walze aufziehen. Beim Auswechseln des dem Verschleiss unterworfenen Aussenmantels 9 verbleibt also der Innenmantel 8 auf dem Rest der Walze und sorgt während des Mantelwechsels für das Kapseln des Druckmittels im Walzeninneren. Für die Abdichtung des Walzeninneren sind an beiden Walzenenden flexible Dichtungen 11 vorgesehen. Der aufgeschobene Aussenmantel 9 ist gegen Axialverschiebung durch einen geeigneten Verschluss 12 an jedem Walzenende gesichert.

Während des Betriebes der Durchbiegungseinstellwalze wird im Walzeninneren ein Ueberdruck aufgebaut, welcher den Innenteil 8 des Walzenmantels elastisch verformt und gegen den Aussenteil 9 drückt. Bei ausreichendem Ueberdruck im Walzeninneren, z.B. im Bereich von 1 - 5 Bar, verformt sich der Innenteil 8 so weit elastisch, dass der Innenteil 8 mit dem Aussenteil 9 einen Presssitz bildet, welcher eine feste Verbindung zwischen den Teilen des Walzenmantels 2 schafft und eine gemeinsame Rotation beider Teile gewährleistet.

Um den erforderlichen Ueberdruck im Walzeninneren zu erzeugen, kann beispielsweise in der Abflussleitung 7 des Druckmittels ein Ablassventil 13 mit gezielter Drosselung vorgesehen sein. Das Ventil kann manuell einstellbar sein, oder es kann eine Regeleinrichtung vorgesehen sein, welche das Ablassventil 13 in Abhängigkeit von dem im Walzeninneren gemessenen Ueberdruck steuert. Während im Normalbetrieb der Ueberdruck im Walzeninneren für eine bestimmungsgemässe Funktion der Walze sorgt, wird nach Druckentlastung des Walzeninneren wiederum ein gewisses Spiel zwischen Aussenteil 9 und Innenteil 8 des Walzenmantels gebildet, so dass sich der Aussenmantel ohne Schwierigkeiten auswechseln lässt, ohne dass im Walzeninneren irgendeine Veränderung erforderlich wäre.

Bei einer anderen Ausführungsform sind die Durchmesser des Innenmantels 8 und des Aussenmantels 9 so gewählt, oder der Innenmantel 8 weist eine derartige als Druckmittel dienende Bombierung auf, dass bei Druckentlastung bereits ein gewisser Haftsitz vorhanden ist. Im Normalbetrieb ist daher fast kein oder nur geringer Ueberdruck im Walzeninneren erforderlich, und der Druckmittelabfluss braucht nicht besonders gedrosselt zu sein. Um stattdessen das Auswechseln des Aussenmantels 9 und das Abziehen vom Innenmantel 8 zu erleichtern, wird im Walzeninneren ein Unterdruck erzeugt. Dies kann erreicht werden, indem an eine bestimmte Leitung im Träger 1 eine Vakuumpumpe angeschlossen wird, so dass der Innenmantel 8 durch den Druckunterschied im Walzeninneren zur Atmosphäre etwas zurückgezogen wird. Dadurch lässt sich das Spiel zum Auf- oder Abziehen des Aussenmantels vergrössern. Natürlich sind in diesem Falle die Klemmkräfte zwischen Innen- und Aussenmantel limitiert. In vielen Fällen reichen sie jedoch aus. Der Innenmantel muss jedoch in diesem Falle als Druckmittel eine gewisse radiale Spannkraft aufweisen, beispielsweise durch eine gewisse Bombierung. Von Vorteil kann eine Kombination beider Ausführungen sein, d.h. im Betrieb wird ein Ueberdruck im Walzeninneren aufrechterhalten, während zum Wechseln des Aussenteiles des Walzenmantels ein Unterdruck im Walzeninneren erzeugt wird.

## Patentansprüche

1. Durchbiegungseinstellwalze mit einem um einen drehfesten Träger (1) rotierbaren, gegenüber dem Träger (1) mit wenigstens einem in Stützrichtung eine Presskraft ausübenden Stützelement (4) abgestützten Walzenmantel (2), wobei der Walzenmantel (2) aus einem inneren (8) und einem äusseren Teil (9) besteht, dadurch gekennzeichnet, dass der innere Teil (8) und der äussere Teil (9) des Walzenmantels (2) derartige Abmessungen aufweisen, dass der innere und der äussere Teil im entspannten Zustand und ohne Einwirkung eines Druckmittels ein zum Abziehen und zum Aufschieben des äusseren Teiles ausreichendes Spiel zueinander aufweisen, und dass im Betriebszustand im Inneren des Walzenmantels (2) mittels eines Druckmittels ein Ueberdruck aufgebaut ist, der den inneren Teil (8) in dem Masse verformt, dass der innere Teil (8) mit dem äusseren Teil (9) einen Presssitz bildet.

2. Walze nach Anspruch 1, dadurch gekennzeichnet, dass die Stützelemente als mit hydraulischem Druckmittel versorgte hydraulische Stützelemente (4) ausgebildet sind, und dass der Ueberdruck im Inneren des Walzenmantels (2) durch das aus den Stützelementen (4) im Betrieb austretende Druckmittel aufgebaut ist.

3. Walze nach Anspruch 2, dadurch gekennzeichnet, dass eine Druckmittel-Abflussleitung (7) vorgesehen ist, welche mit einem Drosselventil (13) versehen ist, dessen Betätigung der Druckmittel-Abfluss aus dem Inneren des Walzenmantels (2) behindert und einen Ueberdruck im Inneren aufbaut.

4. Walze nach Anspruch 3, dadurch gekennzeichnet, dass das Drosselventil (13) in Abhängigkeit vom Druck im Inneren des Walzenmantels derart steuerbar ist, dass ein vorgegebener Druck im Inneren eingeregelt wird.

5. Durchbiegungseinstellwalze mit einem um einen drehfesten Träger (1) rotierbaren, gegenüber dem Träger (1) mit wenigstens einem in Stützrichtung eine Presskraft ausübenden Stützelement (4) abgestützten Walzenmantel (2), wobei der Walzenmantel (2) aus einem inneren (8) und einem äusseren Teil (9) besteht, dadurch gekennzeichnet, dass der innere Teil (8) und der äussere Teil (9) des Walzenmantels (2) derartige Abmessungen aufweisen, dass die Teile (8, 9) einen Haftsitz miteinander bilden, und dass das Innere des Walzenmantels (2) an eine Unterdruck-Leitung angeschlossen ist, über die im Inneren ein Unterdruck erzeugbar ist, welcher den inneren Teil (8) des Walzenmantels derart verformt, dass ein zum Abziehen und zum Aufschieben des äusseren Teiles (9) ausreichendes Spiel zwischen dem inneren Teil (8) und dem äusseren Teil (9) entsteht.

## Claims

1. Deflection adjustment roller with a roller shell (2) which can rotate about a non-rotatable carrier (1) and is supported with respect to the carrier (1) by at least one support member (4) which exerts a pressure in the support direction, the roller shell (2) consisting of an inner part (8) and an outer part (9), characterised in that the inner part (8) and the outer part (9) of the roller shell (2) are dimensioned such that, when in the relaxed state and without the action of a pressure medium, there is sufficient play between the inner and the outer part for the outer part to be drawn off and pushed on, and that during operation an overpressure is built up by means of a pressure medium in the interior of the roller shell (2) which deforms the inner part (8) to an extent such that the inner part (8) forms a press fit with the outer part (9).

2. Roller according to claim 1, characterised in that the support members are formed as hydraulic support members (4) supplied with hydraulic pressure medium, and that the overpressure in the interior of the roller shell (2) is built up by the pressure medium which leaves the support members (4) during operation.

3. Roller according to claim 2, characterised in that a pressure medium discharge line (7) is provided which comprises a throttle valve (13), the actuation of which impedes the discharge of pressure medium from the interior of the roller shell (2) and builds up an overpressure in the interior.

4. Roller according to claim 3, characterised in that the throttle valve (13) can be controlled in accordance with the pressure in the interior of the roller shell such that a predetermined pressure is set in the interior.

5. Deflection adjustment roller with a roller shell (2) which can rotate about a non-rotatable carrier (1) and is supported with respect to the carrier (1) by at least one support member (4) which exerts a pressure in the support direction, the roller shell (2) consisting of an inner part (8) and an outer part (9), characterised in that the inner part (8) and the outer part (9) of the roller shell (2) are dimensioned such that the parts (8, 9) form a transition fit with one another, and that the interior of the roller shell (2) communicates with an underpressure line via which an underpressure can be produced in the interior which deforms the inner part (8) of the roller shell so as to produce sufficient play between the inner part (8) and the outer part (9) for the outer part (9) to be drawn off and pushed on.

## Revendications

1. Rouleau à réglage de la flexion, avec une enveloppe de rouleau (2), susceptible de tourner autour d'un support (1) fixe en rotation, soutenue par rapport au support (1) à l'aide d'au moins un élément d'appui (4) exerçant une force de pression dans la direction d'appui, l'enveloppe de rouleau (2) étant composée d'une partie extérieure et d'une partie intérieure (9), caractérisé en ce que la partie intérieure (8) et la partie extérieure (9) de l'enveloppe de rouleau (2) sont de dimensions telles que la partie intérieure et la partie extérieure présentent, à l'état relaxé et sans effet d'une fluide sous pression, un jeu suffisant pour pouvoir extraire et enfiler la partie extérieure, et en ce qu'à l'état de fonctionnement, une pression positive est établie au moyen d'un fluide sous pression, à l'intérieur de l'enveloppe de rouleau (2), et produit une déformation dans la masse de la partie intérieure (8), de manière que la partie intérieure (8) forme un ajustement serré avec la partie extérieure (9).

2. Rouleau selon la revendication 1, caractérisé en ce que les éléments d'appui sont réalisés sous forme d'éléments d'appui (4) hydrauliques alimentés avec un fluide hydraulique, et en ce que la pression positive régnant à l'intérieur de l'enveloppe de rouleau (2) est établie au moyen du fluide sous pression sortant des éléments d'appui (4) pendant le fonctionnement.

3. Rouleau selon la revendication 2, caractérisé en ce qu'est prévu une conduite d'évacuation de fluide sous pression (7), pourvue d'une soupape d'étranglement (13), dont l'actionnement empêche toute sortie de fluide sous pression hors de l'intérieur de l'enveloppe de rouleau (2) et établit une pression positive à l'intérieur.

4. Rouleau selon la revendication 3, caractérisé en ce que la soupape d'étranglement (13) peut être commandée en fonction de la pression régnant à l'intérieur de l'enveloppe de rouleau, de manière à régler une pression prédéterminée à l'intérieur.

5. Rouleau à réglage de la flexion, avec une enveloppe de rouleau (2), susceptible de tourner autour d'un support (1) fixe en rotation, soutenue par rapport au support (1) à l'aide d'au moins un élément d'appui (4) exerçant une force de pression dans la direction d'appui, l'enveloppe de rouleau (2) étant composé d'une partie extérieure et d'une partie intérieure (9), caractérisé en ce que la partie intérieure (8) et la partie extérieure (9) de l'enveloppe de rouleau (2) sont de dimensions telles que les parties (8, 9) forment ensemble un siège d'adhérence, et en ce que l'intérieur de l'enveloppe de rouleau (2) est raccordé à une conduite de vide, par l'intermédiaire de laquelle peut être produit à l'intérieur un vide produisant une déformation de la partie intérieure (8) de l'enveloppe de rouleau, de manière que soit créé un jeu entre la partie intérieure (8) et la partie extérieure (9), pour pouvoir extraire et enfiler la partie extérieure (9).
